Europäisches Patentamt

European Patent Office

Office européen des brevets

(19)

(11) Publication number: 0 158 471

A1

# (12) EUROPEAN PATENT APPLICATION

(21) Application number: 85302055.0

(22) Date of filing: 25.03.85

(51) Int. Cl.⁴: C 04 B 40/02

(30) Priority: 06.04.84 GB 8408950

(43) Date of publication of application:
16.10.85 Bulletin 85/42

(84) Designated Contracting States:
AT BE CH DE FR GB IT LI LU NL SE

(71) Applicant: IMPERIAL CHEMICAL INDUSTRIES PLC
Imperial Chemical House Millbank
London SW1P 3JF(GB)

(72) Inventor: Alford, Neil McNeil
85 Daleside
Upton-by-Chester Chester(GB)

(72) Inventor: Howard, Anthony James
96 Grappenhall Road
Stockton Heath Warrington WA4 2 AX(GB)

(72) Inventor: Kendall, Kevin
7 Whitley Close
Runcorn Cheshire(GB)

(74) Representative: Walmsley, David Arthur Gregson et al,
Imperial Chemical Industries PLC Legal department:
Patents PO Box 6 Bessemer Road
Welwyn Garden City Hertfordshire AL7 1HD(GB)

(54) Cement product.

(57) A process of treating a cement product which has been produced by setting of a cement composition comprising at least one hydraulic cement, water, and at least one water-soluble or water-dispersible organic polymer and which has a flexural strength of at least 15 MPa, the process comprising heating the cement product in a controlled manner in order to thermally decompose at least some of the organic polymer. The thus treated product, although having a reduced flexural strength, is less sensitive to water and less flammable than the cement product before treatment. The flexural strength may be improved by contacting the thus treated cement product with water.

EP 0 158 471 A1

Croydon Printing Company Ltd

QM 33069 EP.

## CEMENT PRODUCT

This invention relates to a cement product, and in particular to a cement product of high flexural strength.

Cement products produced by setting of a cement composition comprising at least one hydraulic cement and water have low flexural strength and tensile strength, and high compressive strength. For this reason such cement products are generally used in compression, and are not used in tension or flexure unless they are reinforced, as in steel reinforced cement products. Such conventional unreinforced cement products generally have a flexural strength of the order of a few MPa, e.g. up to 5 MPa. The flexural strength is often much lower.

Cement products have recently been described which have flexural strengths substantially above those of the conventional cement products. For example, in GB Patent 1563190 there is described a cement product having a flexural strength of greater than 15 MPa and which is produced by setting of a homogeneous cement composition comprising a hydraulic cement, 15 to 28 parts by weight of water for every 100 parts of hydraulic cement, and 0.1 to 3 parts by weight of water-dispersible polymer for every 100 parts of hydraulic cement.

Cement products of even greater flexural strength, in general greater than 35 MPa, and as high as 70 MPa, even without reinforcement, are described in European Patent Publication No. 0021682, and in US Patent No. 4353738.

These cement products may be produced from a composition of hydraulic cement, a water-soluble or water-dispersible organic polymer, and a low proportion of water, by thoroughly mixing the composition under conditions of high shear, and optionally under an atmosphere of reduced pressure, and setting the composition. The cement products are characterised by a defined pore size distribution in that in the product not more than 2%, and preferably not more than 0.5%, of the total volume of the product comprises pores having a maximum dimension exceeding 100 microns, preferably not exceeding 15 microns. The pore dimensions referred to are those detected by the method of quantitative microscopy.

Cement products of even higher flexural strength, which may be greater than 100 MPa and may even be as high as 200 MPa, even without reinforcement, are described in European Patent Publication No. 0 055 035. The cement products, which preferably possess the porosity criteria of the aforementioned European Patent Publication No. 0 021 682, are produced by setting of a homogeneous cement composition comprising at least one hydraulic cement, water in a proportion of not more than 25% by weight of the composition, and at least one water-soluble or water-dispersible organic polymer or copolymer in a proportion of 1 to 15% by weight of the hydraulic cement in the composition, the organic polymer or copolymer being selected according to a rheological test defined in the patent publication.

Although the cement products described in the aforementioned publications do have high flexural strengths, and also high tensile strengths, such that the products, even when unreinforced, may be used in applications where they are subjected to flexure or tension, the cement products do possess some disadvantages, at least when used in some applications. For example, the cement products generally contain an organic polymer, which polymer may be water-soluble or water-dispersible, and the products exhibit a certain sensitivity to water, for example, when exposed to an aqueous environment, e.g., the products may swell. This sensitivity to water may also result in some loss of flexural strength of the cement product when the product is exposed to an aqueous environment, although the product will still possess a high flexural strength. Also, the organic polymer in the cement product may be thermally unstable with the result that when the product is exposed to a temperature of several hundred degrees centigrade the polymer may thermally decompose, or may even burn, and the product may suffer - spalling, or in an extreme case it may disintegrate if suddenly exposed to such a high temperature.

The present invention, which overcomes the aforementioned disadvantages, at least to some extent, is based on the observation that provided the organic polymer is thermally decomposed and/or is removed from the cement product of the type hereinbefore described in a controlled manner, the resultant cement product, although it has a reduced flexural strength, still possesses a surprisingly high flexural strength and tensile strength. The resultant cement product has a much reduced sensitivity to water and a much reduced flammability and combustibility, indeed the product may be completely non-flammable and non-combustible.

According to the present invention there is provided a process of treating a cement product, which cement product has been produced by setting of a cement composition comprising at least one hydraulic cement, water, and at least one water-soluble or water-dispersible organic polymer and which has a flexural strength of at least 15 Mpa, the process comprising heating the cement product in a controlled manner in order to thermally decompose at least some of the organic polymer.

In the process of the invention some only of the organic polymer in the cement product may be decomposed by heating of the product in a controlled manner. Even in this case there will thereby be achieved a reduction in the thermal instability, and in particular the flammability and combustibility of the cement product, and a reduction in the sensitivity of the product to water.

For even greater improvements in thermal stability and reduction in the sensitivity of the product to water it is preferred that substantially all of the organic polymer in the cement product is thermally decomposed in a controlled manner. Thermal decomposition may take the form of, for example, carbonisation. In a preferred embodiment of the invention some at least, and preferably substantially all of the organic polymer is thermally decomposed and removed from the cement product by heating of the product in a controlled manner.

Thermal decomposition of the organic polymer may be monitored by monitoring the loss in weight of the cement product which occurs on heating.

Removal of the organic polymer from the cement product is best achieved by heating in a controlled manner and in an oxidising atmosphere, e.g. in air or in an atmosphere richer in oxygen than air.

General guidelines can be given as to the intended meaning of "heating in a controlled manner." Thus, the cement product should not be heated at a rate which is so great that the evolution of polymer decomposition products from the cement product causes spalling of the product, cracking of the product or, in an extreme case, disintegration of the product. Thus, the rate of heating should be controlled, so that the structural integrity of the cement product is maintained, and in particular the rate of heating should be maintained below a rate at which the aforementioned effects on the cement product are observed.

Where the proportion of organic polymer in the cement product is low the rate of heating of the cement product which can be tolerated is greater than the rate of heating which can be tolerated in a cement product containing a high proportion of organic polymer.

The rate of heating which can be tolerated will be greater the greater is the porosity of the cement product; if the cement product has a high overall porosity the gaseous products of decomposition of the organic polymer may escape more easily. The rate of heating which can be tolerated will also depend upon the dimensions of the cement product, and particularly on its thickness. In general, the thicker is the cement product the lower is the rate of heating which can be tolerated.

The rate of heating which can be tolerated may also depend upon the nature of the organic polymer in the cement product; where the organic polymer decomposes on heating to produce large volumes of gaseous decomposition products it may be possible to tolerate only a low rate of heating.

The heating may be effected in a step-wise manner. For example, the cement product may be heated in a controlled manner to a first temperature, maintained at this temperature, and thereafter heated in a controlled manner to a second temperature.

Suitable rates of heating, that is suitable "heating in a controlled manner", may be determined by reasonable trial and experiment, and by reference to the specific examples in this application.

It is preferred to heat the cement product at a rate not greater than 30°C/minute, more preferably not greater than 10°C/minute.

The temperature to which a cement product must be heated in order to remove substantially all of the organic polymer therefrom, particularly in an oxidising atmosphere, or to convert it into a stable decomposition product, will also depend on the nature of the organic polymer. Thus, by way of example in the case where the organic polymer is a vinyl polymer a temperature of about 450°C will in general suffice. The cement product will of course be heated at least to a temperature at which the organic polymer is decomposed. Such a minimum temperature of decomposition of the organic polymer may be determined experimentally or by reference to the literature.

In general, the cement product will be heated to a temperature of at least 400°C, preferably at least 500°C. In order to determine whether or not substantially all of the organic polymer has been removed from the cement product at a given temperature, or has been converted to a stable decomposition product at a given temperature, it is sufficient merely to heat the cement product in a controlled manner until decomposition products, e.g. carbon dioxide, are no longer evolved, or until there is no further decrease in weight.

As stated hereinbefore removal of the organic polymer from a cement product produced by setting of a composition comprising a hydraulic cement, water, and a water-soluble or water-dispersible organic polymer, leads to some reduction in the flexural strength of the product. In general this reduction will depend on the proportion of organic polymer originally present in the cement product and it may range, for example, up to 50% for a cement product containing 1.5% of organic polymer by weight of the cement up to 80% or even more for a cement product containing 5% or more of organic polymer by weight of the cement.

The cement product which is heated in a controlled manner in the process of the invention is itself produced by setting of a mouldable composition, and it may be made in a variety of shapes, which may be of simple profile, or which may be of complicated profile. The product which is produced in the process of the invention may also have a similar variety of shapes, that is to say the shape of the cement product before controlled heating is substantially maintained after controlled heating in the process of the invention. This latter product may be used at high temperature and it may have a shape which is not readily achieved by conventional ceramic manufacturing processes such as powder compaction followed by sintering. Thus, a cement composition of hydraulic cement, water and organic polymer may be thoroughly and homogeneously mixed, and the composition may be shaped, for example into a shape of complicated profile, and the thus shaped composition may be set to produce a cement product. Thereafter the shaped cement product is subjected to the process as herein described, in which process the product retains its shape.

By the term "hydraulic cement" we mean any material which sets and hardens by the addition of water, and which thus sets and hardens in the presence of water. The hydraulic cement may be a silicate (siliceous) cement, for example Portland cement. If desired it may be an aluminate (aluminuous) cement, for example a calcium aluminate cement. Mixtures of two or more different hydraulic cements may be used to produce the cement product which is subjected to controlled heating in the process of the invention. Where the product produced in the process of the invention is to be used as a refractory product it is preferred that the hydraulic cement be a calcium aluminate cement.

In the process of the invention there is used a cement product which has been produced by setting of a cement composition comprising at least one hydraulic cement, water, and at least one water-soluble or water-dispersible organic polymer which cement product has a flexural strength of at least 15 MPa.

The production of a cement product having such a flexural strength is governed inter alia by features such as the proportion of water in the composition from which the product is produced, the proportion of organic polymer in the composition and the nature of the polymer, the intensity of mixing of the components of the cement composition and the method of mixing of the components, and the conditions under which the cement composition is caused to set to the cement product. These features are described in the patents and patent publications hereinbefore referred to.

The organic polymer in the composition from which the cement product used in the process of the invention is produced, may be water-dispersible, but is preferably water-soluble, and is chosen to facilitate homogeneous mixing of the components of the composition from which the cement product is produced by setting. Examples of suitable organic polymers include

(i)     cellulose ethers, for example hydroxypropyl methyl cellulose,

(ii)    amide-substituted polymers, for example a polymer or copolymer of acrylamide,

(iii)   polyalkylene oxide derivatives which may be for example a polyalkylene oxide (alternatively described as a polyalkylene glycol) for example polyalkylene glycols of molecular weight above about 10,000, or polyalkoxy derivatives of alcohols, phenols or the like, and

(iv)    partially hydrolysed vinyl ester polymers or copolymer, particularly partially hydrolysed polyvinyl acetate having a degree of hydrolysis of, for example, 70% to 95%.

In the composition from which the cement product is produced the organic polymer will generally be present in a proportion of at least 1% by weight of the hydraulic cement in the composition. It will generally not be necessary to use in the composition more than 15%, preferably not more than 10%, of organic polymer by weight of the hydraulic cement in the composition.

The proportion of water in the composition from which the cement product is produced should be sufficient to render the composition plastically deformable and is desirably not greater than 30% by weight of the hydraulic cement in the composition, and preferably is not greater than 25% by weight. The proportion of water is preferably as low as possible consistent with the composition being plastically deformable as the strength of the cementitious product generally increases with decrease in the proportion of water in the composition from which the product is produced. In general it will be necessary for the composition to comprise at least 5% of water by weight of the hydraulic cement in the composition.

The composition from which the cement product is produced may contain other materials known in the art, for example fillers and/or aggregates conventional in the art, dispersing aids, setting modifiers, e.g. gypsum, and materials which increase fracture toughness, for example fibrous materials.

Useful fillers/aggregates include various forms of silica, for example sand, quartz sand, and fine amorphous silica, e.g. fumed silica, olivine, titania, for example pigment grades of titania, slate powder, and mixtures thereof, and metals.

Where the composition from which the cement product is produced comprises filler materials the preferred proportions by weight of organic polymer and water are based on proportions by weight of the total weight of the hydraulic cement and filler material in the composition.

In the process of the invention it is preferred to use a cement product of the type described in European Patent Publication No. 0 021 682 in which not more than 2% of the total volume of the product comprises pores having a maximum dimension exceeding 100 microns, as measured by the method of quantitative microscopy disclosed in the aforementioned publication. Such cement products generally have flexural strengths in excess of 35 MPa. It is preferred to use a cement product in which not more than 0.5% of the total volume of the product comprises pores having a maximum dimension exceeding 100 microns, preferably not exceeding 15 microns. Such preferred cement products prior to treatment in the process of the invention may have flexural strength of greater than 50 MPa, or even greater than 100 MPa.

The production of such a preferred cement product may be assisted by mixing very thoroughly the composition from which the product is produced, for example by mixing under conditions of high shear. For example, the composition may be mixed on a Banbury mixer or in a screw extruder. However, the composition is most preferably mixed under conditions of high shear on a twin-roll mill by passing the composition repeatedly through the nip between the rolls of the mill, this procedure producing a thoroughly well mixed composition.

Production of the preferred cement product may also be assisted by effecting the mixing of the components of the composition under an atmosphere at reduced pressure, e.g. under vacuum, or by application of a moderate pressure at least in the early stages of the setting reaction.

The composition may be shaped easily and conveniently into shapes of simple or complicated profile by use of relatively low pressures without the necessity of resorting to the use of high pressure forming techniques, although the use of high pressures is not excluded. If desired the composition may be shaped, for example, by extrusion or by shaping in a press, e.g. in a hydraulic press.

It may be of advantage, and indeed it is preferred in order to assist the control of the porosity characteristics of the cement product, to effect at least the initial stage of the setting of the composition under an applied pressure and not to release the pressure before the setting has proceeded at least to the extent that the composition does not relax on release of the pressure, that is, does not change substantially in dimensions on release of the pressure. The applied pressure need only be relatively low, for example up to 5 MPa. The time for which the pressure is desirably applied will depend on the nature of the hydraulic cement and on the rate of setting of the composition in the initial stages of the setting, and may be determined by simple experiment.

The setting of the cement composition to produce the cement product may be effected at ambient temperature although setting may be accelerated by use of elevated temperatures.

The later stages of the setting of the cement composition are also desirably effected in a humid atmosphere, e.g. in an atmosphere of substantially 100% relative humidity, or under water.

Thus, setting of the cement composition may be achieved in conventional manner, for example by maintaining the composition in a humid atmosphere, preferably of relative humidity at or near 100%, for a period of 0.5 to 28 days, particularly in the later stages of the setting of the composition. An alternative method is to maintain the composition at elevated temperature and pressure and high humidity to accelerate setting of the composition.

A cement product of the type described in European Patent Publication 0 055 035 may be used in the process of the invention, that is, a cement product produced by setting of a composition comprising

(a)     at least one hydraulic cement,

(b)     water in a proportion of not more than 25% by weight of the composition, and

(c)     at least one water-soluble or water-dispersible organic polymer or copolymer in a proportion of 1 to 15% by weight of the hydraulic cement in the composition, in which the hydraulic cement and the polymer or copolymer are selected such that a test composition comprising 100 parts by weight of hydraulic cement, 5 parts by weight of the polymer or copolymer, and 16 parts by weight of water when extruded in a capillary rheometer undergoes an increase of at least 25% in shear stress when a ten-fold increase in the shear rate of the test composition is effected when the shear rates are measured are within the range 0.1 to 5 second$^{-1}$.

Such a product has a particularly high flexural strength, for example greater than 100 MPa and even as high as 200 MPa.

A preferred polymer for use in the composition from which the cement product of European Patent Publication 0 055 035 is produced is a partially hydrolysed vinyl ester polymer or copolymer, particularly partially hydrolysed polyvinyl acetate having a degree of hydrolysis of, for example, 70% to 95%.

The cement product which has been subjected to controlled heating in the process of the invention may have an overall porosity, that is a volume of pores in the product as a proportion of the total volume of the product including pores, of up to about 50%. In general the overall porosity will not be in excess of 35%. As the cement product contains organic polymer, and as the organic polymer is thermally decomposed and/or removed from the product by operation of the process of the invention, the product of the process will have an increased overall porosity. In order that this latter product should have high flexural strength it is preferred that it also comprises not more than 2% of the total volume of the product of pores exceeding 100 microns in maximum dimension.

The cement product which has been subjected to controlled heating in the process of the invention is dimensionally stable and of high flexural strength and it may be further processed in order to increase its strength. For example, where the hydraulic cement is a refractory cement it may be heated in order to sinter the cement. A suitable temperature at which to effect sintering is a temperature in excess of 1200°C, although the temperature chosen will of course depend on the nature of the hydraulic cement.

The strength, and particularly the flexural strength, of the cement product which has been produced by controlled heating in the process of the invention may be increased by rehydrating the product by contacting the product with water. For example the product may be immersed in water, e.g. at ambient temperature, for a time of the order of 24 hours or more and the thus rehydrated product may then be dried. It is found that a product rehydrated in this way may have a flexural strength which is about the same as or which may be greater than that of the cement product before the latter product was subjected to controlled heating in the process of the invention. Furthermore, the rehydrated product is less sensitive to water than is the product produced in the process of the invention.

The cement product which has been subjected to controlled heating in the process of the invention may be further treated in order to improve its suitability for use in certain applications. For example, it may be impregnated with a hydrophobic material in order to make it more suitable for use in electrical applications, although the product may be used in such applications even without such treatment.

The cement product which has been subjected to controlled heat in the process of the invention may find application in building products where non-combustibility, low water sensitivity, and high dimensional stability is desired. The product may also find an application as a replacement for ceramic materials and highly compressed asbestos cement product, particularly where the product is to be used at temperatures up to about 350°C. The present product may readily be made into complex shapes of large size, when compared with ceramic products made by conventional technology. When compared with asbestos cement products the cement product which has been subjected to controlled heating may be made into complex shapes merely by shaping of the precursor cement composition. Asbestos cement products, particularly highly compressed asbestos cement products, must be machined to shape.

The invention is illustrated by the following Examples in which all parts are expressed as parts by weight.

Example 1

75 parts of calcium aluminate cement (Secar 71), 25 parts of fumed silica, and 1.98 parts of 80% hydrolysed polyvinyl acetate (Gohsenol KH17S Nippon Gosei) were dry mixed and the mixture was added to 17 parts of water. The resultant composition was blended in a bladed high shear mixer which was fitted with an extruder discharge and the resultant homogeneous dough-like composition was extruded from the mixer in the form of a cohesive and homogeneous sheet.

The sheet was then lightly pressed for 10 minutes between sheets of poly(ethylene terephthalate) in a hydraulic press at a temperature of 80°C and at an applied pressure of 3 MPa. The 3 mm thick sheet was then removed from the press, the sheets of poly(ethylene terephthalate) were removed, and the sheet was set by heating at 80°C for 18 hours.

The cement sheet had the following properties

Flexural strength     34.3 Mpa.

Flexural modulus     22.3 GPa.

The cement sheet was placed in an oven in air at a temperature of 800°C. A high rate of heating could be tolerated in view of the low proportion of organic polymer in the cement sheet. After 1 hour in the oven the sheet was removed. The sheet had the following properties

Flexural strength     25.3 Mpa.

Flexural modulus     21.9 GPa.

The sheet was then placed in water at a temperature of 50°C, and after 6 days the sheet was removed from the water and dried. The sheet had the following properties

Flexural strength     43.2 MPa.

Flexural modulus     26.1 GPa.

Example 2

The procedure of Example 1 was repeated except that a composition of 75 parts of Ordinary Portland Cement, 25 parts of fumed silica, 2 parts of polyacrylamide, and 16 parts of water was used and, in order to set the sheet, the composition was pressed for 10 seconds at an applied pressure of 3 MPa at a temperature of 20°C and was thereafter heated at 80°C for 18 hours.

The properties of the cement sheet initially produced were as follows.

Flexural strength        23.9 MPa.

Flexural modulus        20.2 GPa.

The properties of the cement sheet after heating at 800°C in air for 1 hour were as follows.

Flexural strength        22.9 MPa.

Flexural modulus        29.7 GPa.

The properties of the cement sheet after heating at 800°C for 1 hour and immersion in water for 6 days at 50°C were as follows.

Flexural strength        40 MPa.

Flexural modulus        38 GPa.

Example 3

The procedure of Example 1 was repeated except that the cement composition comprised

100 parts of calcium aluminate cement (Secar 71),

100 parts of alumina,

5 parts of hydrolysed polyvinyl acetate
(Gohsenol KH 17S Nippon Gosei)

20 parts of water, the composition was pressed at 5 MPa pressure for 5 minutes at 90°C, and the resultant 2.5 mm thick sheet was finally heated at 80°C for 12 hours.

The cement sheet had the following properties.

Flexural strength        52 ± 3 MPa

Flexural modulus        52 GPA

The cement sheet was then heated in air at a rate of 5°C for minute up to a temperature of 500°C at which point the cement product did not contain any visible carbonaceous residue.

After cooling to room temperature the sheet had
the following properties.

Flexural strength    22 MPa

Flexural modulus    31 GPa

The properties of the cement sheet after
immersion in water for 7 days at 50°C and thereafter
drying for 24 hours at 80°C were as follows

Flexural strength    48 ± 3 MPa

Example 4

The procedure of Example 1 was repeated except
that the cement composition comprised

100 parts of calcium aluminate cement (Ciment Fondu), 4 parts of hydrolysed polyvinyl acetate
(Gohsenol KH 17S Nippon Gosei) 9.5 parts of water,
the composition was pressed at 4 MPa pressure for 10
minutes at 80°C, and the resultant 2.5 mm thick sheet
was finally heated at 80°C for 18 hours.

The cement sheet had the following properties.

Flexural strength    138.6 ± 3    MPa

Flexural modulus    43.2 ± 1.8  GPa

The cement sheet was then heated in air at a
rate of 3°C per minute up to a temperature of 450°C at
which point the cement product did not contain any
visible carbonaceous residue.

After cooling to room temperature the sheet had
the following properties.

Flexural strength    13.3 ± 3.1  MPa

Flexural modulus    19.3 ± 2.7  GPa

The properties of the cement sheet after
immersion in water for 24 hours at 50°C and thereafter
drying for 18 hours at 80°C were as follows

Flexural strength    60.9 ± 1.1  MPa

Flexural modulus    61.6 ± 4.0  GPa

Example 5

100 parts of calcium aluminate cement (Secar 71) and 7 parts of 80% hydrolysed polyvinyl acetate (Gohsenol KH 17S) were dry mixed and the mixture was added to 17 parts of water. The resultant composition was blended in a bladed high shear mixer and was then removed from the mixer in the form of a crumble and converted into a cohesive, continuous and homogeneous sheet by passing the composition repeatedly through the nip between the rolls of a twin-roll mill.

The composition was then set to a cement product following the procedure described in Example 1.

The resultant cement product sheet having a thickness of 3.05 mm had the following properties.

Flexural strength      147 MPa

Flexural modulus      48.4 GPa

Samples of the sheet were then placed in ovens and heated in air at varying rates of temperature increase, and the properties of the sheets determined again. The results are given in the following Table 1.

TABLE 1

| Heating Conditions | Properties of Sheet | |
|---|---|---|
| | Flexural Strength MPa | Flexural Modulus GPa |
| 2°C/min - 20°C to 250°C<br>1 hour at 250°C<br>5°C/min - 250°C to 450°C<br>½ hour at 450°C | 19.0 ± 0.9 | - |
| 2°C/min - 20°C to 450°C<br>1 hour at 450°C | 15.4 ± 0.7 | 20.3 ± 0.7 |
| 5.5 °C/min - 20°C to 450°C<br>1½ hours at 450°C | 14.9 ± 0.4 | 19.3 ± 0.5 |
| 10°C/min - 20°C to 450°C<br>2½ hours at 450°C | 10.2 ± 1.9<br>some disruption<br>of sample | 16.7 ± 0.3 |
| 20°C/min - 20°C to 450°C<br>1 hour at 450°C | Severe spalling of sample<br>Pieces fell off sample | |

Example 6

The procedure of Example 5 was followed in two separate experiments to produce cement product sheets (A and B respectively), except that in each experiment a calcium aluminate cement (Secar 71) was used and 2.5 parts (A) and 5 parts (B) respectively of 80% hydrolysed polyvinyl acetate were used. The cement product sheets had thicknesses of, respectively, 3.55 mm and 4.3 mm. The procedure of heating in an oven described in Example 5 was then repeated and the conditions of heating and the properties of the resultant products are given in Table 2.

Example 7

The procedure of Example 5 was followed to produce cement product sheet except that a calcium aluminate cement (Ciment Fondu) was used, and 4 parts of 80% hydrolysed polyvinyl acetate was used.

The properties of the cement product after various periods of heating are given in Table 3.

### TABLE 2

| Heating Conditions | Properties of Sheet | | | |
|---|---|---|---|---|
| | Flexural A Strength MPa | Flexural Modulus GPa | Flexural B Strength MPa | Flexural Modulus GPa |
| - | 82 | 39 | 147 | 47 |
| 2°C/min - 20°C to 450°C 1 hour at 450°C | 11.7 ± 0.9 | 17.8 ± 0.7 | 20.5 ± 2.3 | 24.2 ± 2.6 |
| 4.6°C/min - 20°C to 400°C 1 hour at 400°C | 14.1 ± 0.1 | 21.2 ± 0.6 | 26.1 ± 10.3 | 22.6 |
| 5.5°C/min - 20°C to 450°C 1½ hours at 450°C | 14.7 ± 0.3 | 19.6 ± 0.3 | 21.0 ± 1.2 | 24.8 ± 0.1 |
| 10°C/min - 20°C to 450°C 2½ hours at 450°C | 13.9 ± 0.1 | 18.2 ± 0.1 | 15.7 ± 3.2 Some spalling of sample | 20.9 ± 2.4 |
| 20°C/min - 20°C to 450°C 1 hour at 450°C | 12.6 ± 0.6 | 19.1 ± 0.9 | 10.5 ± 0.9 Sever spalling of sample Pieces fell from sample | 14.4 ± 0.5 |

0158471

## TABLE 3

| Heating Conditions | Properties of Sheet | |
| --- | --- | --- |
| | Flexural Strength MPa | Flexural Modulus GPa |
| - | 145 | 48 |
| 2°C/min - 20°C to 250°C<br>1 hour at 250°C<br>5°C/min - 250°C to 450°C<br>½ hour at 450°C | 14.5 ± 0.8 | 17.4 ± 0.4 |
| 2°C/min - 20°C to 450°C<br>1 hour at 450°C | 16.0 ± 0.9 | 18.3 ± 0.4 |
| 4.6°C/min - 20°C to 400°C<br>1 hour at 400°C | 16.8 ± 0.6 | 20.3 ± 1.0 |
| 5.5°C/min - 20°C to 450°C<br>1½ hours at 450°C | 16.3 ± 1.6 | 17.7 ± 1.2 |
| 10°C/min - 20°C to 450°C<br>2½ hours at 450°C | 14.4 + 1.0 | 16.7 + 1.8 |

0158471

-24-

## Example 8

Samples prepared as described in Example 5 which had been heated at 2°C/min from 20°C to 250°C, for 1 hour at 250°C, at 5°C/min from 250°C to 450°C, and finally at 450°C for ½ hour, were examined to determine the apparent densities of the samples, by weighing the samples and measuring their external dimensions. Separate sample (A and B) were then heated at 1425°C and at 1500°C for 2 hours in order to effect sintering, and the apparent densities were redetermined, and the properties of the samples were determined.

The results are given in Table 4.

### TABLE 4

|  | A | B |
|---|---|---|
| Apparent density before heating to sinter g/ml | 2.28 | 2.28 |
| Apparent density after heating to sinter g/ml | 2.36 | 2.56 |
| Flexural strength MPa Flexural Modulus GPa before heating to sinter | 19.0 ± 0.9 – | 19.0 ± 0.9 – |
| Flexural Strength MPa Flexural Modulus GPa after heating to sinter | 47.2 ± 1.6 49.6 ± 1.0 | 67.4 ± 3.5 68.8 ± 7.2 |

CLAIMS

1.     A process of treating a cement product, which cement product has been produced by setting of a cement composition comprising at least one hydraulic cement, water, and at least one water-soluble or water-dispersible organic polymer and which has a flexural strength of at least 15 MPa, the process comprising heating the cement product in a controlled manner in order to thermally decompose at least some of the organic polymer.

2.     A process as claimed in claim 1 in which substantially all of the organic polymer is thermally decomposed.

3.     A process as claimed in claim 1 or claim 2 in which heating is effected in an oxidising atmosphere.

4.     A process as claimed in any one of claims 1 to 3 in which the cement product is heated at not more than 10°C per minute.

5.     A process as claimed in any one of claims 1 to 4 in which the cement product is heated to a temperature of at least 400°C.

6.     A process as claimed in any one of claims 1 to 5 in which the hydraulic cement in the cement product is a silicate cement and/or an aluminate cement.

7.     A process as claimed in any one of claims 1 to 6 in which the organic polymer in the cement product is a partially hydrolysed polyvinyl acetate having a degree of hydrolysis of 70% to 95%.

8.     A process as claimed in any one of claims 1 to 7 in which the cement product which is heated in a controlled manner comprises between 1% and 15% of organic polymer by weight of the cement in the product.

9.     A process as claimed in any one of claims 1 to 8
in which in the cement product which is heated in a
controlled manner not more than 2% of the total volume
of the product comprises pores having a maximum
dimension exceeding 100 microns.

10.     A process as claimed in any one of claims 1 to 9
in which the cement product which is heated in a
controlled manner has a flexural strength of greater
than 50 MPa.

11.     A process as claimed in any one of claims 1 to
10 in which the cement product which is heated in a
controlled manner has been produced by setting of a
composition comprising

(a)     at least one hydraulic cement,

(b)     water in a proportion of not more than 25% by
weight of the composition,

(c)     at least one water-soluble or water-dispersible
organic polymer or copolymer in a proportion of 1 to
15% by weight of the hydraulic cement in the
composition, in which the hydraulic cement and the
polymer or copolymer are selected such that a test
composition comprising 100 parts by weight of hydraulic
cement, 5 parts by weight of the polymer or copolymer,
and 16 parts by weight of water when extruded in a
capillary rheometer undergoes an increase of at least
25% in shear stress when a ten-fold increase in the
shear rate of the test composition is effected when the
shear rates are measured are within the range 0.1 to 5
second$^{-1}$.

12.     A process as claimed in any one of claims 1 to
11 in which the cement product which has been heated in
a controlled manner is contacted with water in order to
increase the flexural strength of the cement product.

13.    A process as claimed in any one of claims 1 to 12 in which the cement product which has been heated in a controlled manner is further heated in order to sinter the cement.

14.    A cement product produced by a process as claimed in any one of claims 1 to 13.

European Patent Office

**EUROPEAN SEARCH REPORT**

. Application number

EP 85 30 2055

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| D,A | GB-A-1 563 190 (ICI LTD.)<br>* Claims 1,5,10 * | 1,6,11 | C 04 B 40/02 |
| D,A | EP-A-0 021 682 (ICI LTD.)<br>* Claim 1 * | 9 | |
| D,A | EP-A-0 055 035 (ICI LTD.)<br>* Claims 1-6,8,12,16,17 * | 1,6-11 | |
| A | DE-A-2 116 372 (MITSUBISHI PETROCHEMICAL CO., LTD.)<br>* Claim. * | | |
| A | DE-A-2 525 327 (DOW CHEMICAL CO.)<br>* Claim 1 * | | |
| A | EP-A-0 069 586 (MARLEY ROOF TILE CO., LTD.)<br>* Claims 1,6,7,9 * | | TECHNICAL FIELDS SEARCHED (Int. Cl.4)<br>C 04 B 24/26<br>C 04 B 40/02 |
| A | US-A-3 781 396 (M. OKUDA et al.)<br>* Claims 1,4 * | | |
| A | US-A-4 407 769 (S. HARADA et al.)<br>* Claim 1 * | | |

The present search report has been drawn up for all claims

| Place of search | Date of completion of the search | Examiner |
|---|---|---|
| BERLIN | 24-05-1985 | STROUD J.G. |